# EUROPEAN PATENT APPLICATION

(11) **EP 2 827 624 A1**
(43) Date of publication of application: **21.01.2015**
(21) Application number: 13176713.9
(22) Date of filing: 16.07.2013
(51) Int. Cl.: H04W 4/26, H04W 4/00, H04L 12/14

(54) **Obtaining usage data of a device-to-device communication session**

(71) Applicant: Koninklijke KPN N.V., 2516 CK The Hague (NL); Nederlandse Organisatie voor Toegepast -Natuurwetenschappelijk Onderzoek TNO, 2628 VK Delft (NL)
(72) Inventor: Busropan, Bryan Jerrel, Den Haag 2492 MR (NL); Norp, Antonius, 2584 EN The Hague (NL); van der Wal, Jacob, 8171 RE Vaassen (NL)
(74) Representative: Wuyts, Koenraad Maria

(57) **Abstract**

The present invention enables obtaining usage data of a device-to-device communication session between two communication devices in a network. The communication devices can be capable of communication in a cellular network. The communication devices measure resources used in the device-to-device communication session and transmit usage data to a server, e.g. a charging server, in the network.

## Description

### FIELD OF THE INVENTION

The present invention relates to device-to-device communication. More specifically the invention relates to a method for obtaining usage data of a device-to-device communication session between two communication devices. The invention also relates to a first communication device configured for a device-to-device communication session with a second communication device.

### BACKGROUND

Recent developments in the 3GPP standard relate to Long Term Evolution (LTE) networks and devices. LTE, also known as 4G (i.e. fourth generation) mobile communications standard, is a standard for wireless communication of high-speed data for mobile phones and data terminals. It is a successor of GSM/EDGE (also known as 2G or 2.5G) and UMTS/HSPA (also known as 3G) network technologies, increasing the capacity and speed using a different radio interface together with core network improvements. Recent LTE extensions allow for device-to-device (D2D) communications, either directly or using the nearby base station as a relay, next to traditional communications that is exclusively between base stations and mobile devices and involves the core network. Device-to-device communications is also known as direct-mode communications. In LTE the device-to-device communication is also known as LTE-Direct communication. LTE-Direct communication can make use of a LTE frequency band or be based on WLAN direct mode communication under control of the Evolved Packet Core of the LTE network.

Allowing and enabling direct-mode communication can be advantageous for a network operator and/or for the user of a mobile communication device. For example, direct-mode communication may require fewer resources (e.g. radio resources, core network resources) compared to network-mode communication. Thus, the network operator may promote direct-mode communication to offload traffic that would otherwise be handled via the operator's base stations and via the operator's core network. The user may also experience benefits, e.g. a better Quality of Service (QoS) (e.g. a higher bit rate and/or lower latency) and/or a lower charge (possibly a zero use-based charge / flat fee) by the operator for a same service provided via direct-mode communications. Furthermore, an operator may offer users additional so-called 'proximity services' such as gaming and local advertisement.

Results of a 3GPP feasibility study into proximity based services (including direct mode communications) are captured in 3GPP TR 22.803 V12.1.0 (2013-03) "Feasibility Study for Proximity Services (ProSe)". TR 22.803 includes a requirement (in clause 6.3) that the operator shall be able to collect accounting data for ProSe communication including activation/deactivation of the ProSe Communication feature, ProSe Communication initiation/termination and ProSe Communication duration and amount of data transferred. How this requirement may be fulfilled is not described.

Typically LTE communications make use of licensed spectrums and LTE communications are considered premium services. Also in LTE-Direct communication mode it would be reasonable to remunerate the spectrum license holder for the use of the spectrum, but mechanisms for charging LTE-Direct communications are not available.

For charging purposes or general record keeping a LTE operator would require information of resource usage in a direct mode session between two communication devices. Use of LTE D2D resources cannot be determined in the network though, as the network typically has no visibility of the D2D data stream. Furthermore, while having an established D2D communication session, one (or both) of the devices may be (temporary) out of LTE coverage, in which case the network may even have no visibility of the communication device(s).

There is a need for a solution that enables a mobile operator to keep track of device-to-device communication sessions of mobile communication devices to enable the operator to perform e.g. charging, an assessment if terms and conditions for D2D use are respected, statistical analyses, data retention, capacity management, spectrum management, session management of the device-to-device communication session and/or general record keeping.

### SUMMARY OF THE INVENTION

The present invention provides a solution that enables an operator to keep track of device-to-device communication sessions of communication devices to enable the operator to perform e.g. charging, an assessment if terms and conditions for D2D use are respected, statistical analyses, data retention, capacity management, spectrum management, session management of the device-to-device communication session and/or general record keeping.

According to an aspect of the invention a method is proposed for obtaining usage data of a device-to-device communication session between a first communication device and a second communication device, one or two of which may be mobile communication devices. The first communication device can be communicatively connectable to a first network. The method can comprise measuring in the first communication device a first resource usage related to the device-to-device communication session to obtain a first measurement result. The method can further comprise generating in the first communication device first usage data comprising the first measurement result or a derivation of the first measurement result. The method can further comprise transmitting the first usage data from the first communication device to a first server in the first network.

The first resource usage is e.g. a data volume sent to the second communication device, a data volume received from the second communication device, a transmit power level at the first communication device, a quality of service (QoS) level, radio channels used, coding schemes used and/or any other resource usage related to the device-to-device communication session. The usage data may be encrypted. An example of a first server is a charging server.

By keeping track of the resource usage in the first communication device and reporting the resource usage to the first server in the network, the operator of the network can keep track of the device-to-device communication sessions between the communication devices. The reported usage data can be used by the operator to perform e.g. charging, an assessment if terms and conditions for D2D use are respected, statistical analyses, data retention, capacity management, spectrum management, session management of the device-to-device communication session and/or general record keeping.

In an embodiment the method can further comprise measuring in the second communication device a second resource usage related to the device-to-device communication session to obtain a second measurement result. The method can further comprise generating in the second communication device second usage data comprising the second measurement result or a derivation of the second measurement result.

The second resource usage is e.g. a data volume sent to the first communication device, a data volume received from the first communication device, a transmit power level at the second communication device, a quality of service (QoS) level, radio channels used, coding schemes used and/or any other resource usage related to the device-to-device communication session. The usage data may be encrypted.

By also keeping track of the resource usage in the second communication device and reporting this resource usage, the first operator may compare the usage data from the first communication device with the usage data from the second communication device. Misreporting by one of the communication devices may thus be detected. The second communication device may alternatively or additionally transmit the usage data to another server. Furthermore, if one of the two communication devices is not able to report the usage data for whatever reason, the usage data from the other communication device may be available.

In an embodiment the method can further comprise transmitting the second usage data from the second communication device to the first communication device using the device-to-device communication session. The method can further comprise transmitting the second usage data from the first communication device to the first server in the first network.

This enables the second communication device to report the usage data for example when no connection to the first network is available in the second communication device.

Usage data transmitted from the second communication device to first communication device may be encrypted.

The second usage data may be transmitted with the first usage data to the first server, appended to the first usage data and/or transmitted separately from the first usage data to the first server.

In an embodiment the second communication device can be communicatively connectable to the first network. The method can further comprise transmitting the second usage data from the second communication device to the first server in the first network.

The first operator may compare the usage data from the first communication device with the usage data from the second communication device. Misreporting by one of the communication devices may thus be detected. Furthermore, if one of the two communication devices is not able to report the usage data for whatever reason, the usage data from the other communication device may be available.

In an embodiment the second communication device can be communicatively connectable to a second network. The method can further comprise transmitting the second usage data from the second communication device to a second server in the second network.

This enabled the operator of the second network to keep track of the device-to-device communication sessions between the communication devices. The reported usage data can be used by the operator to perform e.g. charging, an assessment if terms and conditions for D2D use are respected, statistical analyses, data retention, capacity management, spectrum management, session management of the device-to-device communication session and/or general record keeping.

An example of a second server is a charging server.

In an embodiment the method can further comprise transmitting the second usage data from the second server to the first server.

This enables the first operator to compare the usage data from the first communication device with the usage data from the second communication device in case the second usage data was initially transmitted to the second server. The usage data may be encrypted.

In an embodiment the method can further comprise using the first usage data and/or the second usage data in the first server for at least one of: charging; an assessment if terms and conditions for device-to-device use are respected; a statistical analysis; data retention; capacity management; spectrum management; or session management of the device-to-device communication session.

In an embodiment the method can further comprise comparing the first usage data with the second usage data in the first server.

In an embodiment the method can further comprise adding a first identifier to the first usage data by the first communication device. The method can further comprise adding a second identifier to the second usage data by the second communication device. The method can further comprise comparing the first usage data with the second usage data in the first server based on the first identifier and the second identifier.

The identifier is e.g. a user ID, a device ID, a session ID or any other identifier. The first identifier and the second identifier can be identical or different identifiers. In the latter case the first server knows which identifiers relate to the device-to-device communication session and matches the identifiers based on this knowledge.

The usage data may include a time stamp for comparing the first usage data with the second usage data.

In an embodiment the method can further comprise receiving first trigger data in the first communication device from the first server, thereby triggering the measuring of first resource usage and/or generating of first usage data in the first communication device. Additionally or alternatively, the method can further comprise receiving second trigger data in the second communication device from the first server, thereby triggering the measuring of second resource data and/or generating second usage data in the second communication device. Additionally or alternatively, the method can further comprise receiving third trigger data in the first communication device from the second communication device, thereby triggering the measuring and/or generating in the first communication device.

The first trigger data may include or consist of the first identifier. The second trigger data may include or consist of the second identifier. The third trigger data may include or consist of the second usage data.

The trigger may be used to control the usage data reporting.

In an embodiment the method can further comprise using the second usage data in the second server for at least one of: charging; an assessment if terms and conditions for device-to-device use are respected; a statistical analysis; data retention; capacity management; spectrum management; or session management of the device-to-device communication session.

In an embodiment the method can further comprise receiving configuration data from the first server in the first communication device, wherein the configuration data defines when the first usage data is to be transmitted to the first server. Additionally or alternatively, the method can further comprise receiving configuration data from the first server in the second communication device, wherein the configuration data defines when the second usage data is to be transmitted to the first server.

The configuration data may be used to control the usage data reporting.

When to transmit the usage data is for example defined as a time interval, fixed date(s) and/or time(s), when reaching a maximum number of bytes in the usage data, when reaching a data usage threshold (e.g. a maximum number of bytes sent and/or received, or when a predefined number of resources is used in general), or the moment when the device-to-device communication session terminates.

In an embodiment the configuration data comprises an indication of a maximum amount of resources, e.g. a maximum amount of data sent and/or received, or a maximum amount of time . The method can further comprise terminating, in the first communication device and/or in the second communication device, the device-to-device communication session if the maximum amount of resources has been reached in the device-to-device communication session. Additionally or alternatively, the method can further comprise requesting, by the first communication device and/or the second communication device, further configuration data comprising a further indication of a maximum amount of resources.

In an embodiment the method can further comprise terminating the device-to-device communication session if the first usage data cannot be transmitted to the first server. Additionally or alternatively, the method can further comprise terminating the device-to-device communication session if the second usage data cannot be transmitted to the first server. Additionally or alternatively, the method can further comprise terminating the device-to-device communication session if the second usage data cannot be transmitted to the second server.

The device-to-device communication session may thus be terminated if no usage data reporting is possible. Free use of premium device-to-device communication or non-controlled use of radio resources in the device-to-device communication session may thus be avoided.

It is possible that a (preconfigured) number of attempts are made to transmit the usage data to the server before terminating the device-to-device communication session.

In an embodiment the method can further comprise terminating the device-to-device communication session by the first server based on the first usage data and/or the second usage data.

The device-to-device communication session may thus be terminated based on a measured amount of used resources.

According to an aspect of the invention a first communication device is proposed that is configured for a device-to-device communication session with a second communication device. The first communication device can be communicatively connectable to a first network. The first communication device can be configured to measure a first resource usage related to the device-to-device communication session to obtain a first measurement result. The first communication device can further be configured to generate first usage data comprising the first measurement result or a derivation of the first measurement result. The first communication device can further be configured to transmit the first usage data to a first server in the first network.

In an embodiment the first communication device can further be configured to perform at least one of: receive second usage data from the second communication device and transmit the second usage data to the first server; add a first identifier to the first usage data; receive first trigger data from the first server to trigger the measurement and/or generation of the first resource usage data; receiving third trigger data from the second communication device to trigger the measuring of the first resource usage data and/or generating of the first usage data; receive configuration data from the first server to set when to transmit the first usage data to the first server, to set when to terminate the device-to-device communication session based on a maximum amount of data transmitted in the device-to-device communication session, or to set when to request further configuration data with a further indication of a maximum amount of data; and terminate the device-to-device communication session if the first usage data cannot be transmitted to the first server.

Hereinafter, embodiments of the invention will be described in further detail. It should be appreciated, however, that these embodiments may not be construed as limiting the scope of protection for the present invention.

### BRIEF DESCRIPTION OF THE DRAWINGS

Aspects of the invention will be explained in greater detail by reference to exemplary embodiments shown in the drawings, in which:
Fig.1 is a simplified architectural view of mobile networks and communication devices;
Figs.2-4 are examples of communication flows between communication devices and a mobile network;
Figs.5-6 are flow diagrams.

### DETAILED DESCRIPTION OF THE DRAWINGS

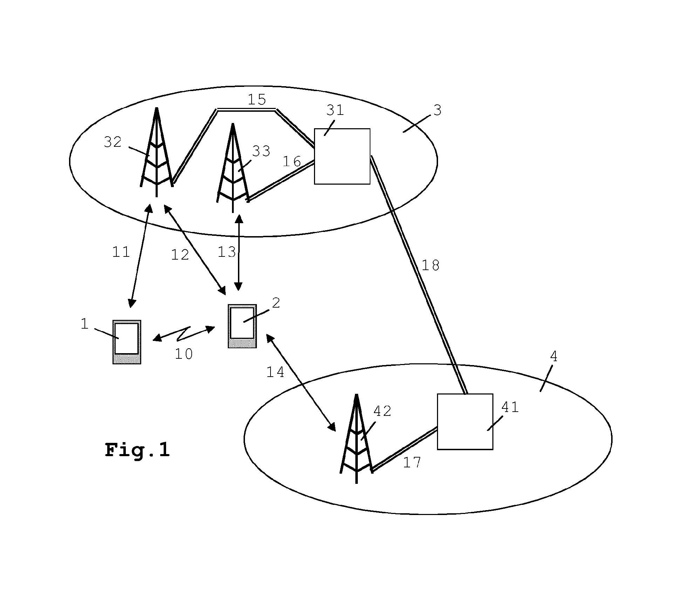

Fig.1 shows a simplified architectural view of mobile networks and communication devices. A first communication device 1 may communicate with a first network 3 via a base station 32. The radio link between the first device 1 and the base station 32 is depicted as arrow 11. A second communication device 2 may communicate with the first network 3, e.g. via the base station 32 or via another base station 33, via the links depicted as arrows 12 and 13, respectively. Alternatively, the second communication device 2 may communicate with a second network 4 via a base station 42. The radio link between the second device 2 and the base station 42 is depicted as arrow 14. The first network 3 and second network 4 are e.g. 2G, 3G or 4G cellular networks or any other cellular network. The device is for example a mobile phone, a smartphone, a tablet computer, a notebook or any other device capable of communication with the network 3,4.

The first communication device 1 and the second communication device 2 are capable of setting up a device-to-device communication session 10. In this device-to-device communication mode the devices 1,2 communicate directly without using the core networks of the operators 3,4. In a device-to-device communication mode it is possible to use a base station of a cellular network for relaying signals between the communication devices 1,2.

A first server 31 may be located in the first network 3. The first server 31 may be communicatively connected to one or more of the base stations 32,33. This is depicted as connections 15 and 16. One or more network nodes may be in between the base stations 32,33 and the first server 31 (not shown). A second server 41 may be located in the second network 4. The second server 41 may be communicatively connected to the base station 42. This is depicted as connection 17. One or more network nodes may be in between the base station 42 and the second server 41 (not shown). The first server 31 and the second server 41 may be communicatively connected, as depicted as connection 18. One or more network nodes may be in between the first server 31 and the second server 41 (not shown).

The invention enables resource usage related to the device-to-device communication session 10 to be measured on the first communication device 1 and/or the second communication device 2. The resource usage may be related to a data volume sent, data received, transmit power levels, quality of service settings (QoS), channels used, a coding scheme used, and etcetera. One or both devices 1,2 report to the server 31 in the network 3 the generated usage data for use in the network, e.g. for charging, to assess if terms and conditions for D2D use are respected, for statistical analyses, for data retention, for capacity management, for spectrum management, for session management of the device-to-device communication session 10 and/or for general record keeping.

Preferably, but not necessarily, both the first communication device 1 and the second communication device 2 report the data use to the network server 31. If both devices 1,2 report the data use, the network server 31 may compare the two reports to detect misreporting of one of the two devices 1,2. The two reports may contain a direct mode session identifier or any other identifier to enable the first server 31 to correlate the reports.

The two devices 1,2 may each transmit the usage data to the first server 31 directly. Alternatively, the second communication device 2 may report the usage data via the first communication device 1, using the D2D communication session, to the first server 31. It is possible that at the same time the first communication device 1 reports the usage data via the second communication device 2 to the first server 31. The second communication device 2 may send the usage data to the first communication device 1 coded with a unique session identifier (or any other identifier). The usage data may be encrypted before transmission over the D2D communication session. The first communication device 1 may forward the usage data from the second communication device 2 to the first server 31. Alternatively the first communication device 1 includes the usage data from the second communication device 2 in its own report before transmission to the first server 31.

When granting permission for direct-mode communication, the network server 31 in the network 3 may indicate to the devices 1,2 the usage data reporting intervals. The reporting interval may contain a timer, for example indicating to report every 10 minutes. Additionally or alternatively the reporting may define that usage data is to be reported when a usage data threshold is reached, for example if 10MB data is used.

The D2D communication session 10 may be actively terminated. For example, if the first communication device 1 or the second communication device 2 is not able to report usage data in the reporting interval to the network, then the device concerned may be configured to terminate the D2D communication session 10. The device may be configured to make a predefined number of attempts to connect to the network and report the usage data before terminating the D2D communication session 10.

If, after termination of the D2D communication session 10, the network connections 11,12,13,14 are restored, the device concerned may complete the reporting. The devices 1,2 may be configured such that before requesting authorization for a new D2D communication session the usage data is to be reported to the network server 31.

The network 3 may instruct the first communication device 1 and/or the second communication device 2 to terminate the D2D communication session 10. The network may use the received usage data to make the decision to terminate the D2D communication session 10.

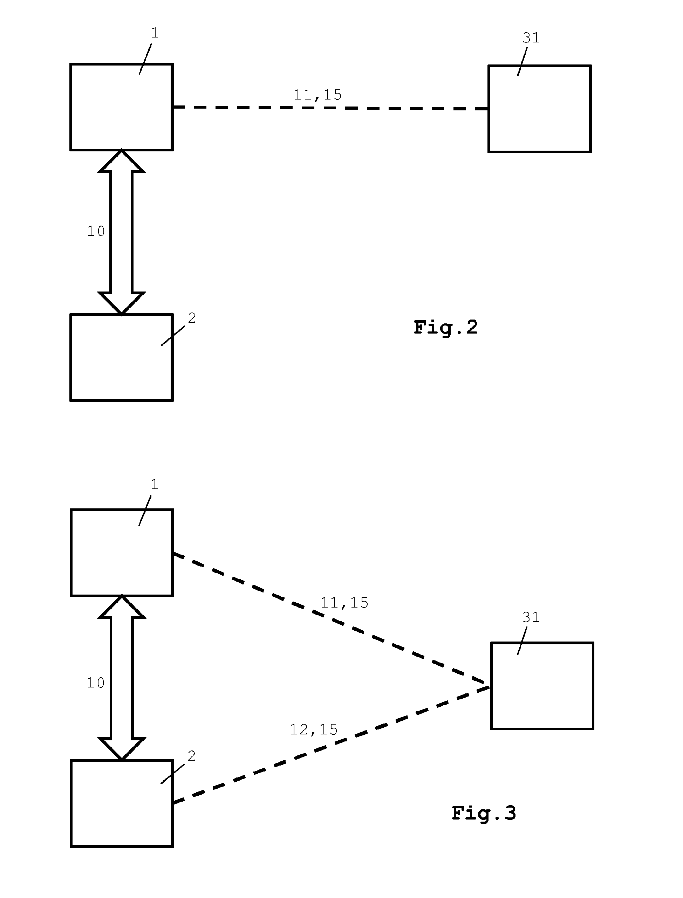

Fig.2 shows an exemplary embodiment of the invention. A first communication device 1 and a second communication device 2 are shown, as well as a first server 31. Compared to Fig.1, in Fig.2 fewer elements are shown, as only the elements relevant to the explanation of this exemplary embodiment are presented.

In the example of Fig.2, the first communication device 1 and the second communication device 2 are in direct communication with each other via D2D communication session 10. In the D2D communication session user data is exchanged between the first communication device 1 and the second communication device 2. The core network of the first network 3 is not used in the D2D communication session. The first communication device 1 may use spectrum that is under control of the first network 3. Therefore the operator of the first network 3 wants to be informed about the usage of resources by the direct communications between the first communication device 1 and the second communication device 2. However, the operator typically does not have direct visibility of the relevant resource usage parameters related to the D2D communication session 10. Therefore the first communication device 1 reports its resource usage to a first server 31 in the network 3 via the communication lines depicted as 11,15. The first server 31 is e.g. an online charging server or control node (e.g. an SGSN or MME) in the network 3.

The first communication device 1 may be connected to the core network of the network 3 for control signaling, e.g. to get authorization for the use of direct mode resources. The reporting may use the same connection 11,15 via a base station 32 (e.g. a BTS, Node-B or eNode-B) and may traverse other core network nodes, such as an RNC, SGSN, MME and/or S-GW.

The first communication device 1 measures resource usage, such as data volume sent, data volume received, QoS, transmit power levels, channels used and/or coding scheme, pertaining to the direct mode communication 10 with the second communication device 2.

The first communication device 1 reports its measurements to the server 31 in the network 3. Reporting is typically done at the end of the direct mode communications, when a reporting timer has expired, or after a certain amount of resources have been spent (e.g. a certain amount of user data has been sent or received).

The network 3, e.g. via the server 31, may indicate to first communication device 1 how often reporting has to be done by sending configuration data with values for the reporting timer or resource amounts to be applied.

If the first communication device 1 moves out of network coverage, it may not be able to report usage data to the server 31. The first communication device 1 may be configured to continue to try reporting for a number of times. If reporting fails, the first communication device 1 may terminate the direct mode communication session 10. If the communication with the network 3 is re-established, the first communication device 1 may complete usage data reporting. Alternatively, the first communication device 1 may be allowed to continue D2D communicating until the reporting timer and/or resource amounts have been spent. In that case, the server 31 may assume that the first communication device 1 has spent the maximum resource amount, until otherwise reported by the first communication device 1 when the first communication device 1 has re-established communications with the network 3.

An advantage of charging by server 31 using the mechanism as explained with Fig.2 is that the D2D connection 10 does not immediately have to be disconnected when the first communication device 1 moves out of coverage temporarily.

As the first communication device 1 may be charged for the use of resources, there is a risk that the first communication device 1 under reports its usage data to the server 31. This may be remedied by having both the first communication device 1 and the second communication device 2 each reporting their resource usage, as shown in Fig.3. By comparing the reports from the first communication device 1 and the second communication device 2, the server 31 may detect misreporting from one of the devices 1,2. Advantage is taken from the fact that with direct communications, the amount of data received by the first communication device 1 should be the same as the amount of data sent by the second communication device 2 and the amount of data sent by the first communication device 1 should be the same as the amount of data received by the second communication device 2.

The first communication device 1 and the second communication device 2 may be connected to different networks 3,4 as shown in Fig.1. The operators of the two networks 3,4 may each have different servers 31,41, in which case the first server 31 in the first network 3 and the second server 41 in the second network 4 may exchange usage data for the first communication device 1 and the second communication device 2 so each can check correctness of the usage reporting by comparing the two different reports.

In the example of Fig.3, the first communication device 1 and the second communication device 2 measure resource usage data, e.g. data volume sent, data volume received, QoS, transmit power levels, channels used and/or coding scheme, pertaining to the direct mode communication 10 between the first communication device 1 and the second communication device 2.

The first communication device 1 reports its measurements to the server 31 in the first network 3. Reporting is typically done at the end of the direct mode communications, when a reporting timer has expired, or after a certain amount of resources has been spent (e.g. a certain amount of user data has been sent or received).

The second communication device 2 reports its measurements to the server 31 in the first network 3. Again, reporting is typically done either at the end of the direct mode communications, or when a reporting timer has expired, or after a certain amount of resources have been spent (e.g. a certain amount of user data has been sent or received).

The server 31 receives both the usage data report from the first communication device 1 and the usage data report from the second communication device 2 and compares these reports.

The usage data reports may contain a direct mode session identifier (or another identifier) identifying the specific instance of direct communication. This identifier may help the server 31 to correlate the different usage reports pertaining to the same direct mode communication session 10, and/or may help the network 3 to route the usage data reports to the correct server 31.

To ensure that usage data reports relate to the same time period and usage data, the network 3, possibly via the server 31, may indicate to both the first communication device 1 and the second communication device 2 when reporting shall start and what reporting timer and resource amounts have to be used before a report shall be sent.

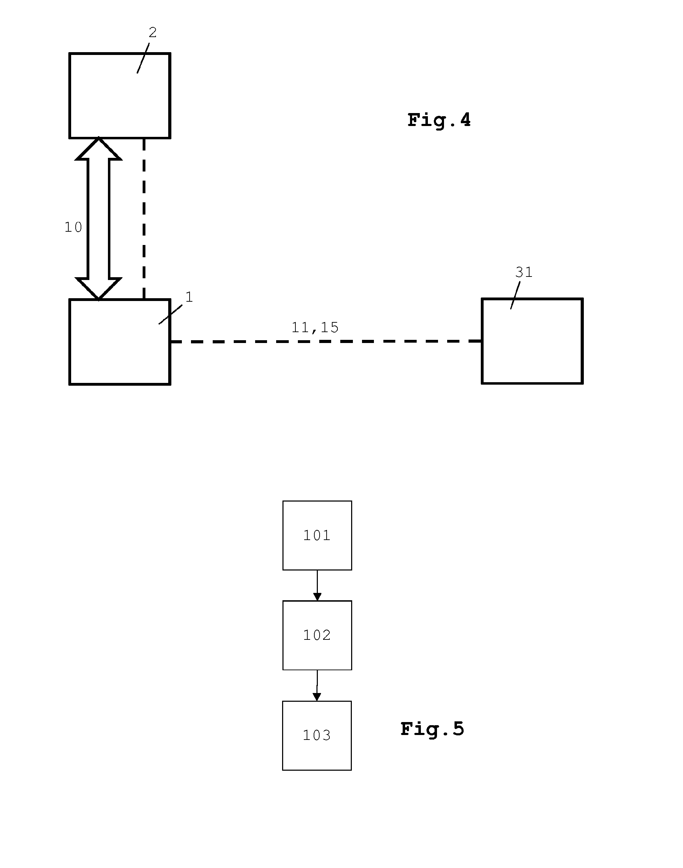

With reference to the exemplary embodiment of Fig.4, in addition or as an alternative to Fig.2 and Fig.3 a different reporting path may be used from the second communication device 2 via the first communication device 1.

In the example of Fig.4, the first communication device 1 and the second communication device 2 measure resource usage data, e.g. data volume sent, data volume received, QoS, transmit power levels, channels used and/or coding scheme, pertaining to the direct mode communication between the first communication device 1 and the second communication device 2.

The first communication device 1 and the second communication device 2 may generate a usage data report. Reporting is typically done at the end of the direct mode communications, when a reporting timer has expired, or after a certain amount of resources have been spent (e.g. a certain amount of user data has been sent or received).

The second communication device 2 may sign the report by encrypting it with an encryption key and may send the encrypted report via the direct communication link 10 to the first communication device 1.

The first communication device 1 may append the encrypted report received from the second communication device 2 to its own report and sends it to the server 31.

The server 31 receives both usage data reports via the first communication device 1 and compares these reports.

Alternatively or additionally the first communication device 1 may at the same time report its usage data via the second communication device 2 (not shown). Also direct reporting from the first communication device 1 and the second communication device 2 may be used in combination with indirect reporting.

An advantage of indirect reporting as shown in Fig.4 is that reporting may be done when one of the devices 1,2 in direct communication does not have a connection with the network 3. Another advantage of indirect reporting is that server 31 receives both reports in one message, which removes the need to correlate two reports that belong together from a stream of usage data reports. Another advantage of indirect reporting is that when two operators of two networks 3,4 are involved, each with a separate server 31,41, it removes the need for the two operators to exchange usage data in order to correlate the reports.

Fig.5 shows a flow diagram of an exemplary embodiment of the invention. The following steps are performed: measuring 101 in a first communication device 1 of a first resource usage related to the device-to-device communication session 10 to obtain a first measurement result; generating 102 in the first communication device 1 first usage data comprising the first measurement result or a derivation of the first measurement result; and transmitting 103 the first usage data from the first communication device 1 to a first server 31 in the first network 3.

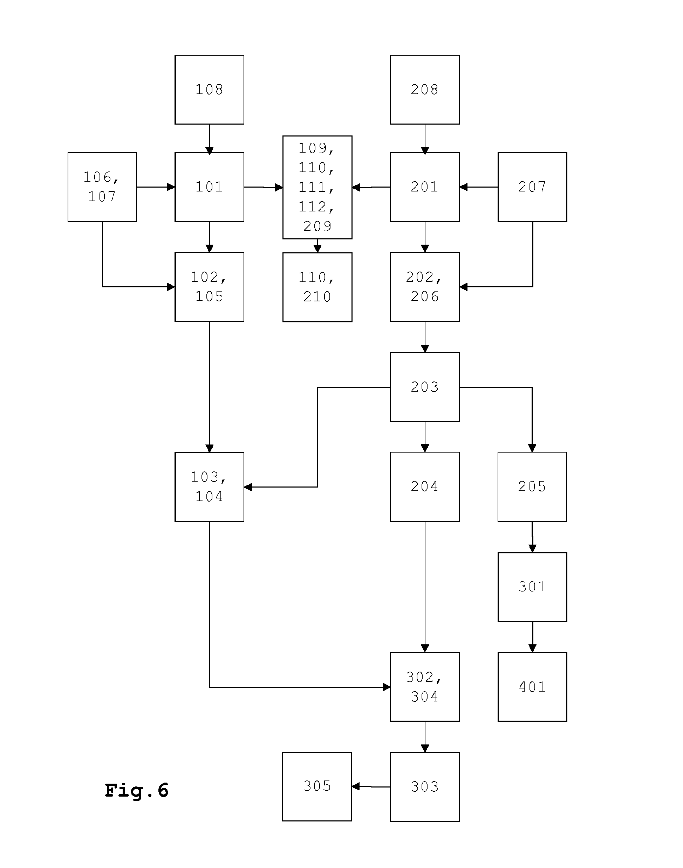

Fig.6 shows a flow chart of another exemplary embodiment of the invention. In the example of Fig.6 optional steps are included. The order of the steps shown is not to be understood as limiting the invention. Fig.6 is one example of how the method of the invention may be implemented. A different order of steps is possible and steps may be omitted. Steps in the hundreds are performed in a first communication device. Steps in the two hundreds are performed in a second communication device. Steps in the three hundreds are performed in a first server. Steps in the four hundreds are performed in a second server.

The steps 101, 102 and 103 of Fig.5 are part of the flow chart of Fig.6. Furthermore, the following steps are shown.

The second communication device 2 may measure 201 a second resource usage related to the device-to-device communication session 10 to obtain a second measurement result. In the second communication device 2 second usage data may be generated 202 comprising the second measurement result or a derivation of the second measurement result.

The second usage data may be transmitted 203 from the second communication device 2 to the first communication device 1 using the device-to-device communication session 10.

The second usage data may be transmitted 104 from the first communication device 1 to the first server 31 in the first network 3.

The second usage data may be transmitted 204 from the second communication device 2 to the first server 31 in the first network 3.

The second usage data may be transmitted 205 from the second communication device 2 to a second server 41 in the second network 4.

The second usage data may be transmitted 301 from the second server 41 to the first server 31.

The first usage data and/or the second usage data may be used 303 in the first server 1 for at least one of: charging; an assessment if terms and conditions for device-to-device use are respected, a statistical analysis; data retention; capacity management; spectrum management; session management of the device-to-device communication session.

The first usage data may be compared 302 with the second usage data in the first server 31.

A first identifier may be added 105 to the first usage data by the first communication device 1. A second identifier may be added 206 a to the second usage data by the second communication device 2. The first usage data may be matched and compared 304 with the second usage data in the first server 31 based on the first identifier and the second identifier.

First trigger data may be received 106 in the first communication device 1 from the first server 31, thereby triggering the measuring and/or generating in the first communication device 1. Second trigger data may be received 207 in the second communication device 2 from the first server 31, thereby triggering the measuring and/or generating in the second communication device 2. Third trigger data may be received 107 in the first communication device 1 from the second communication device 2, thereby triggering the measuring and/or generating in the first communication device 1.

The second usage data may be used 401 in the second server 41 for at least one of: charging; an assessment if terms and conditions for device-to-device use are respected, a statistical analysis; data retention; capacity management; spectrum management; session management of the device-to-device communication session.

Configuration data may be received 108 from the first server 31 in the first communication device 1, wherein the configuration data defines when the first usage data is to be transmitted to the first server 31. Configuration data may be received 208 from the first server 31 in the second communication device 2, wherein the configuration data defines when the second usage data is to be transmitted to the first server 31.

In the first communication device 1 and/or in the second communication device 2 the device-to-device communication session 10 may be terminated 109,209 if the maximum amount of resources is reached in the device-to-device communication session 10. By the first communication device 1 and/or the second communication device 2 further configuration data may be requested 110,210 comprising a further indication of a maximum amount of resources.

The device-to-device communication session 10 may be terminated 110 if the first usage data cannot be transmitted to the first server 31. The device-to-device communication session 10 may be terminated 111 if the second usage data cannot be transmitted to the first server 31. The device-to-device communication session 10 may be terminated 112 if the second usage data cannot be transmitted to the second server 41.

The device-to-device communication session 10 may be terminated 305 by the first server 31 based on the first usage data and/or the second usage data.

One embodiment of the invention may be implemented as a program product for use with a computer system. The program(s) of the program product define functions of the embodiments (including the methods described herein) and can be contained on a variety of non-transitory computer-readable storage media. Illustrative computer-readable storage media include, but are not limited to: (i) non-writable storage media (e.g., read-only memory devices within a computer such as CD-ROM disks readable by a CD-ROM drive, ROM chips or any type of solid-state non-volatile semiconductor memory) on which information is permanently stored; and (ii) writable storage media (e.g., flash memory, floppy disks within a diskette drive or hard-disk drive or any type of solid-state random-access semiconductor memory) on which alterable information is stored.

## Claims

1. A method for obtaining usage data of a device-to-device communication session (10) between a first communication device (1) and a second communication device (2), wherein the first communication device (1) is communicatively connectable to a first network (3), the method comprising:
measuring (101) in the first communication device (1) a first resource usage related to the device-to-device communication session (10) to obtain a first measurement result;
generating (102) in the first communication device (1) first usage data comprising the first measurement result or a derivation of the first measurement result; and
transmitting (103) the first usage data from the first communication device (1) to a first server (31) in the first network (3).

2. The method according to claim 1, further comprising:
measuring (201) in the second communication device (2) a second resource usage related to the device-to-device communication session (10) to obtain a second measurement result; and
generating (202) in the second communication device (2) second usage data comprising the second measurement result or a derivation of the second measurement result.

3. The method according to claim 2, further comprising:
transmitting (203) the second usage data from the second communication device (2) to the first communication device (1) using the device-to-device communication session (10); and
transmitting (104) the second usage data from the first communication device (1) to the first server (31) in the first network (3).

4. The method according to claim 2, wherein the second communication device (2) is communicatively connectable to the first network (3), the method further comprising:
transmitting (204) the second usage data from the second communication device (2) to the first server (31) in the first network (3).

5. The method according to claim 2, wherein the second communication device (2) is communicatively connectable to a second network (4), the method further comprising:
transmitting (205) the second usage data from the second communication device (2) to a second server (41) in the second network (4).

6. The method according to claim 5, further comprising transmitting (301) the second usage data from the second server (41) to the first server (31).

7. The method according to any one of the claims 2-6, further comprising using (303) the first usage data and/or the second usage data in the first server (1) for at least one of: charging; an assessment if terms and conditions for device-to-device use are respected, a statistical analysis; data retention; capacity management; spectrum management; session management of the device-to-device communication session.

8. The method according to claim 7, further comprising comparing (302) the first usage data with the second usage data in the first server (31).

9. The method according to claim 8, further comprising:
adding (105) a first identifier to the first usage data by the first communication device (1);
adding (206) a second identifier to the second usage data by the second communication device (2); and
comparing (304) the first usage data with the second usage data in the first server (31) based on the first identifier and the second identifier.

10. The method according to claim 9, further comprising at least one of:
receiving (106) first trigger data in the first communication device (1) from the first server (31), thereby triggering the measuring and/or generating in the first communication device (1);
receiving (207) second trigger data in the second communication device (2) from the first server (31), thereby triggering the measuring and/or generating in the second communication device (2); and
receiving (107) third trigger data in the first communication device (1) from the second communication device (2), thereby triggering the measuring and/or generating in the first communication device (1).

11. The method according to any one of the claims 5-10, further comprising using (401) the second usage data in the second server (41) for at least one of: charging; an assessment if terms and conditions for device-to-device use are respected, a statistical analysis; data retention; capacity management; spectrum management; session management of the device-to-device communication session.

12. The method according to any one of the preceding claims, further comprising at least one of:
receiving (108) configuration data from the first server (31) in the first communication device (1), wherein the configuration data defines when the first usage data is to be transmitted to the first server (31); and
receiving (208) configuration data from the first server (31) in the second communication device (2), wherein the configuration data defines when the second usage data is to be transmitted to the first server (31).

13. The method according to claim 12, wherein the configuration data comprises an indication of a maximum amount of resources and wherein the method further comprises at least one of:
terminating (109,209), in the first communication device (1) and/or in the second communication device (2), the device-to-device communication session (10) if the maximum amount of resources is transmitted in the device-to-device communication session (10); and
requesting (110,210), by the first communication device (1) and/or the second communication device (2), further configuration data comprising a further indication of a maximum amount of resources.

14. The method according to any one of the claims 2-13, further comprising at least one of:
terminating (110) the device-to-device communication session (10) if the first usage data cannot be transmitted to the first server (31);
terminating (111) the device-to-device communication session (10) if the second usage data cannot be transmitted to the first server (31); and
terminating (112) the device-to-device communication session (10) if the second usage data cannot be transmitted to the second server (41).

15. The method according to any one of the preceding claims, further comprising terminating (305) the device-to-device communication session (10) by the first server (31) based on the first usage data and/or the second usage data.

16. A first communication device (1) configured for a device-to-device communication session (10) with a second communication device (2), wherein the first communication device (1) is communicatively connectable to a first network (3), and wherein the first communication device (1) is configured to:
measure a first resource usage related to the device-to-device communication session (10) to obtain a first measurement result;
generate first usage data comprising the first measurement result or a derivation of the first measurement result; and
transmit the first usage data to a first server (31) in the first network (3).

17. The first communication device (1) according to claim 16, further configured to perform at least one of:
receive second usage data from the second communication device (2) and transmit the second usage data to the first server (31);
add a first identifier to the first usage data;
receive first trigger data from the first server (31) to trigger the measurement and/or generation of the first resource usage data;
receiving third trigger data from the second communication device (2) to trigger the measuring and/or generating of the first resource usage data;
receive configuration data from the first server (31) to set when to transmit the first usage data to the first server (31), to set when to terminate the device-to-device communication session (10) based on a maximum amount of data transmitted in the device-to-device communication session (10), or to set when to request further configuration data with a further indication of a maximum amount of data; and
terminate the device-to-device communication session (10) if the first usage data cannot be transmitted to the first server (31).
